# EUROPÄISCHE PATENTSCHRIFT

(11) **EP 1 216 362 B1**
(45) Veröffentlichungstag und Bekanntmachung des Hinweises auf die Patenterteilung: **02.05.2003**
(21) Anmeldenummer: 01957897.0
(22) Anmeldetag: 27.06.2001
(51) Int. Cl.: F16B 43/00, F16B 5/02

(54) **VERBINDUNGSELEMENT MIT EXZENTERSCHEIBEN**
CONNECTING ELEMENT WITH ECCENTRIC DISKS
ELEMENT DE RACCORDEMENT DOTE DE RONDELLES A EXCENTRIQUE

(30) Priorität: 13.07.2000 DE 20012108 U
(43) Veröffentlichungstag der Anmeldung: 26.06.2002
(73) Patentinhaber: Altenloh, Brinck & Co. GmbH & Co. KG, D-58256 Ennepetal (DE)
(72) Erfinder: HOFSCHNEIDER, Manfred, 42349 Wuppertal (DE)
(74) Vertreter: Zapf, Christoph, Dipl.-Ing.
(86) Internationale Anmeldenummer: EP0107339
(87) Internationale Veröffentlichungsnummer: WO02006687

(56) Entgegenhaltungen:
- CH-A- 283 167
- FR-A- 2 720 845
- PATENT ABSTRACTS OF JAPAN vol. 008, no. 128 (M-302), 14. Juni 1984 (1984-06-14) & JP 59 030433 A (TAIHOU KOGYO KK), 18. Februar 1984 (1984-02-18)

## Beschreibung

Die vorliegende Erfindung betrifft ein Verbindungselement (vgl. FR-A-2720845), bestehend aus einem Bolzenelement mit Kopf und einem sich an diesen anschließenden Schaft, wobei der Kopf aus einem konzentrisch zu einer Bolzenlängsachse angeordneten Angriff für ein Werkzeug und einer exzentrisch zu der Bolzenlängsachse angeordneten ersten Exzenterscheibe gebildet ist und aus mindestens einer, einen Umfangs-Stanzgrat aufweisenden, zweiten Exzenterscheibe, die mit einer exzentrisch angeordneten Aufschiebeöffnung auf den Schaft aufschiebbar ist.

Derartige Verbindungselemente dienen zum Verbinden und relativen Ausrichten von beispielsweise zwei Bauteilen zueinander. Dabei weisen gattungsgemäße Verbindungselemente auf dem Schaft einen Gewindeabschnitt auf, auf den eine Schraubenmutter aufschraubbar ist. Die beiden Exzenterscheiben passen in Ausnehmungen der beiden Bauteile, wobei die Verbindung über die aufschraubbare Mutter fixierbar ist. Ein Verdrehen des Kopfes führt dann über die Exzenterscheiben zu einer Lageveränderung der Bauteile.

Bei der auf den Schaft aufschiebbaren Exzenterscheibe handelt es sich meist um ein Stanzelement. Beim Stanzvorgang entsteht eine Kante, die an einer Seite eine abgerundete Form und an ihrer anderen Seite einen in Stanzrichtung überstehenden Stanzgrat aufweist. Dieser Stanzgrat führt bei Anlage in der Ausnehmung oftmals zu Beschädigungen des Bauteils. Um derartige Beschädigungen bei der Montage zu verhindern, ist es üblich, die Exzenterscheibe vor der Montage zu entgraten, was mit Aufwand und entsprechenden Kosten verbunden ist.

Nachteilig bei gattungsgemäßen Verbindungselementen ist auch, daß die meist notwendigen Lageausrichtung der beiden Exzenterscheiben zueinander während der Montage relativ zeitaufwendig ist.

Der vorliegenden Erfindung liegt die Aufgabe zugrunde, ein gattungsgemäßes Verbindungselement zu schaffen, das ohne Entgraten herstellbar ist und trotzdem eine leichte und schnelle Montage derart erlaubt, daß der vorhandene Stanzgrat nicht störend ist.

Erfindungsgemäß wird dies dadurch erreicht, daß der Schaft und die zweite Exzenterscheibe eine derartige Kodierung aufweisen; daß die zweite Exzenterscheibe ausschließlich derart lagerichtig auf den Schaft aufschiebbar ist, daß der Umfangs-Stanzgrat von dem Kopf weg weist.

Durch die erfindungsgemäße Ausgestaltung des Verbindungselementes wird erreicht, daß ein Entgraten der zweiten Exzenterscheibe nicht notwendig ist, da die Kodierung verhindert, daß der bei der Herstellung entstandene Grat in der Ausnehmung des Bauteils zur Anlage kommt. Als besonders vorteilhafte Kodierung hat sich die Anordnung zweier Führungsnuten mit in Richtung der Bolzenlängsachse verlaufender Längsachse und unterschiedlichen Querschnitten erwiesen. Die Führungsnuten wirken mit sich ins Innere der exzentrisch angeordneten Aufschiebeöffnung der zweiten Exzenterscheibe erstreckenden Nasen derart zusammen, daß die zweite Exzenterscheibe ausschließlich lagerichtig auf den Schaft aufgeschoben werden kann.

In einer weiteren Ausführungsform erfolgt die Kodierung über nur eine, im Querschnitt unsymetrische Führungsnut, in der eine entsprechend ausgeführte Nase führbar ist.

Durch die erfindungsgemäße Kodierung ist nicht nur die korrekte Lage der zweiten Exzenterscheibe hinsichtlich des vorhandenen Grates sondern auch in Bezug auf die am Kopf angeordnete Exzenterscheibe einstellbar. Beispielweise kann es notwendig sein, beide Exzenterscheiben deckungsgleich in Bezug auf die Bolzenlängsachse anzuordnen.

Weitere vorteilhafte Ausführungsformen sind in den Unteransprüchen enthalten. Anhand des in der beiliegenden Zeichnung dargestellten Ausführungsbeispiels wird die Erfindung näher erläutert. Es zeigen:
- Fig. 1: ein erfindungsgemäßes Bolzenelement in Seitenansicht,
- Fig. 2: ein erfindungsgemäßes Bolzenelement in Vorderansicht,
- Fig. 3: eine erfindungsgemäße zweite Exzenterscheibe in Draufsicht,
- Fig. 4: eine zweite Ausführungsform eines erfindungsgemäßen Bolzenelements in Vorderansicht,
- Fig. 5: eine zweite Ausführungsform einer erfindungsgemäßen zweiten Exzenterscheibe in Draufsicht.
- Fig. 6: eine dritte Ausführungsform eines erfindungsgemäßen Bolzenelements in Vorderansicht,
- Fig. 7: eine dritte Ausführungsform einer erfindungsgemäßen zweiten Exzenterscheibe in Draufsicht.

In den verschiedenen Figuren der Zeichnungen sind gleiche Teile stets mit den selben Bezugszeichen versehen.

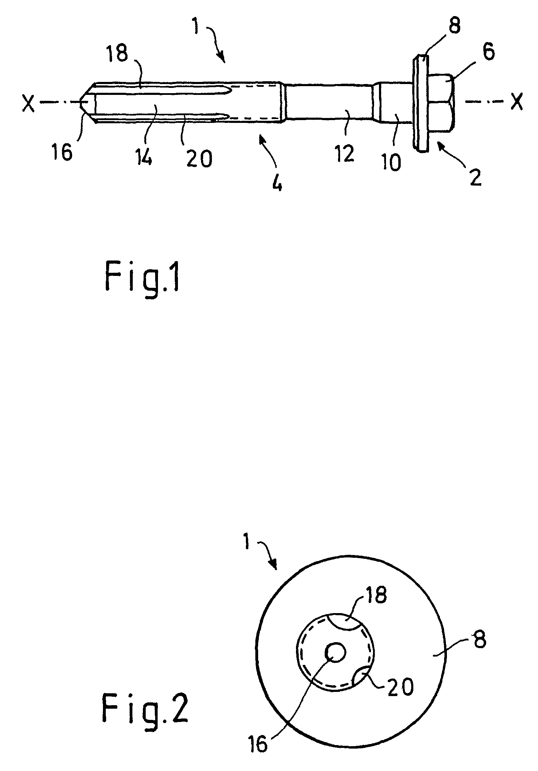

Wie aus Fig. 1 zu erkennen ist, besitzt ein erfindungsgemäßes Bolzenelement, insbesondere eine Schraube 1, einen Kopf 2 und einen im wesentlichen zylindrischen Schaft 4 sowie eine Bolzenlängsachse X-X. Der Kopf 2 besteht aus einem Angriff 6 und einer exzentrisch zu der Längsachse X-X angeordneten ersten Exzenterscheibe 8. Der Schaft 4 ist im dargestellten Ausführungsbeispiel in drei Abschnitte 10, 12, 14 unterteilt. Er beginnt im Anschluß an die erste Exzenterscheibe 8 mit einem Führungsabschnitt 10, der in einen Mittelabschnitt 12, der einen geringeren Außendurchmesser als der Führungsabschnitt 10 aufweist, übergeht. An den Mittelabschnitt 12 schließt sich ein Gewindeabschnitt 14 mit einer an seinem freien Ende angeordneten Spitze 16 an. In der vorteilhaften Ausführungsform weist der Gewindeabschnitt 14 eine erste Führungsnut 18 und eine zweite Führungsnut 20 auf, deren Längsachsen parallel zur Bolzenlängsachse X-X verlaufen. Wie Fig. 2 zu entnehmen ist, besitzen die beiden Führungsnuten 18, 20 unterschiedliche Querschnitte.

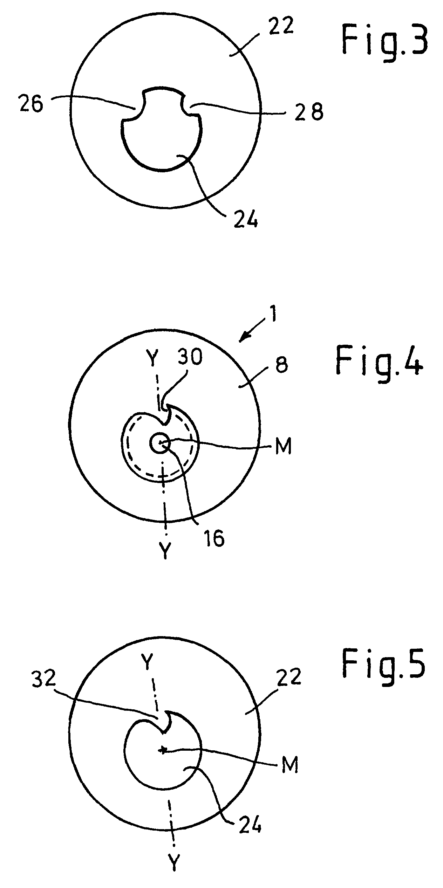

Fig. 3 zeigt eine erfindungsgemäße zweite Exzenterscheibe 22 mit einer exzentrisch angeordneten Aufschiebeöffnung 24. Die Aufschiebeöffnung 24 ist derart dimensioniert, daß sie auf den Gewindeabschnitt 14 der Schraube 1 aufschiebbar ist. Eine erste Nase 26 und eine zweite Nase 28 sind derart ausgeführt und in der Aufschiebeöffnung 24 angeordnet, daß sie in den Führungsnuten 18, 20 des Gewindeabschnitts 14 geführt werden können. Dabei sind die Führungsnuten 18, 20 derart aufeinander abgestimmt, daß die zweite Exzenterscheibe 22 nur derart ausgerichtet auf den Schaft 4 aufgeschoben werden kann, daß der bei der Herstellung entstandene Stanzgrat bei der Montage nicht in Richtung des Kopfes 2 weist und somit nicht mit einem nicht dargestellten Bauteil in Anlage kommt. Entsprechend weist die erste Nase 26 einen Querschnitt auf, der dem Querschnitt der ersten Führungsnut 18 angepaßt ist und die zweite Nase 28 weist einen Querschnitt auf, der dem Querschnitt der zweiten Führungsnut 20 angepaßt ist. Beispielsweise können die Führungsnuten 18, 20 bzw. die mit diesen zusammenwirkenden Nasen 26, 28 unterschiedlich tief oder unterschiedlich breit sein, sie können aber auch unterschiedlich geformte Nutflanken aufweisen. Weiterhin ist es durch Anordnung der Führungsnuten 18, 20 und der Nasen 26, 28 möglich, die durch die Exzentrizität bestimmte Lage der zweiten Exzenterscheibe 22 auf die der ersten Exzenterscheibe 8 abzustimmen.

Die Fig. 4 und 5 verdeutlichen eine zweite Ausführungsform eines erfindungsgemäßen Verbindungselementes. Die Kodierung des Verbindungselementes erfolgt durch nur eine Führungsnut 30, in der eine in der Aufschiebeöffnung 24 der zweiten Exzenterscheibe 22 angeordnete Nase 32 führbar ist. Die Führungsnut 30 weist im Querschnitt eine konkav und eine konvex gekrümmte Nutflanke auf, die Flanken der Nase 32 sind entsprechend angepasst. Die bezogen auf eine durch einen Mittelpunkt M verlaufende Mittenachse Y-Y der Führungsnut 30 bzw. der Nase 32 unsymetrischen Querschnitte der Führungsnut 30 und der Nase 32 gewährleisten ebenfalls, daß der bei der Herstellung entstandene Stanzgrat nicht in Richtung des Kopfes 2 montierbar ist. Alternativ wäre auch denkbar, eine der Nutflanken senkrecht und die andere schräg zur Bolzenlängsachse X-X auszuformen.

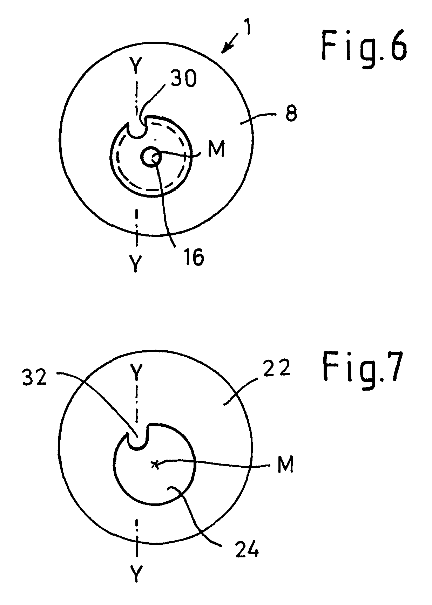

Die Fig. 6 und 7 zeigen eine weitere Ausführungsform eines erfindungsgemäßen Verbindungselementes. Die Kodierung des Verbindungselementes erfolgt ebenfalls durch nur eine Führungsnut 30, in der eine in der Aufschiebeöffnung 24 der zweiten Exzenterscheibe 22 angeordnete Nase 32 führbar ist. Die Führungsnut 30 bzw. die Nase 32 weisen im Querschnitt eine parallel zu einem Durchmesser D des Schaftes 4 verlaufende Mittenachse Y-Y auf. Dadurch ist ebenfalls gewährleistet, daß die zweite Exzenterscheibe 22 nur lagerichtig auf den Schaft 4 aufschiebbar ist.

Die Führungsnuten 18, 20, 30 können beispielsweise mit Hilfe von Scheibenfräsern hergestellt werden. Für die Fertigung zweier Führungsnuten 18, 20 ist es sinnvoll, die Scheibenfräser parallel auf einer Welle aufgespannt anzuordnen. Grundsätzlich ist auch eine umformende Bearbeitung denkbar.

Neben ihrer Funktion als Kodierungselemente übertragen die Führungsnuten 18, 20, 30 über die Nasen 26, 28, 32 das Drehmoment des Bolzenelementes auf die zweite Exzenterscheibe 22.

Die Ausrichtung der ersten Exzenterscheibe 8 im Verhältnis zum Angriff 6 ist ebenfalls frei wählbar. Im montierten Zustand wird im dargestellten Ausführungsbeispiel die zweite Exzenterscheibe 22 durch eine hier nicht dargestellte, auf den Gewindeabschnitt 14 aufschraubbare Mutter gesichert.

Die Erfindung ist nicht auf das dargestellte und beschriebene Ausführungsbeispiel beschränkt, sondern umfaßt auch alle im Sinne der Erfindung gleichwirkenden Ausführungen.

## Patentansprüche

1. Verbindungselement, bestehend aus einem Bolzenelement mit einem Kopf (2) und einem sich an diesen anschließenden Schaft (4), wobei der Kopf (2) aus einem konzentrisch zu einer Bolzenlängsachse (X-X) angeordneten Angriff (6) für ein Werkzeug und einer exzentrisch zu der Bolzenlängsachse (X-X) angeordneten ersten Exzenterscheibe (8) gebildet ist und aus mindestens einer, einen Umfangs-Stanzgrat aufweisenden, zweiten Exzenterscheibe (22), die mit einer exzentrisch angeordneten Aufschiebeöffnung (24) auf den Schaft aufschiebbar ist,
**dadurch gekennzeichnet, daß** der Schaft (4) und die zweite Exzenterscheibe (22) eine derartige Kodierung aufweisen, daß die zweite Exzenterscheibe (22) ausschließlich derart lagerichtig auf den Schaft (4) aufschiebbar ist, daß der Umfangs-Stanzgrat von dem Kopf (2) weg weist.

2. Verbindungselement nach Anspruch 1,
**dadurch gekennzeichnet, daß** die Kodierung aus mindestens einer im Schaft (4) befindlichen Führungsnut (30) und einer in der Aufschiebeöffnung (24) der zweiten Exzenterscheibe (22) angeordneten Nase (32) besteht, die in der Führungsnut (30) des Schaftes (4) geführt werden kann.

3. Verbindungselement nach Anspruch 2,
**dadurch gekennzeichnet, daß** die sich im Schaft (4) befindliche Führungsnut (30) einen unsymetrischen Querschnitt aufweist und die Nase (32) entsprechend der Führungsnut unsymetrisch ausgebildet ist.

4. Verbindungselement nach Anspruch 1,
**dadurch gekennzeichnet, daß** der Schaft (4) mindestens zwei Führungsnuten (18, 20) mit zueinander unterschiedlichen Querschnitten aufweist, die mit zwei ins Innere der Aufschiebeöffnung (24) der zweiten Exzenterscheibe (22) ragenden Nasen (26, 28) zusammenwirken, wobei jede Nase (26, 28) nur jeweils in einer der Führungsnuten (18, 20) führbar ist.

5. Verbindungselement nach einem der Ansprüche 1 bis 4,
**dadurch gekennzeichnet, daß** der Schaft (4) einen einendigen Gewindeabschnitt (14) aufweist, auf den eine Schraubenmutter aufschraubbar ist.

6. Verbindungselement nach einem der Ansprüche 1 bis 5,
**dadurch gekennzeichnet, daß** die Führungsnuten (18, 20, 30) durch Fräsen hergestellt sind.

7. Verbindungselement nach einem der Ansprüche 1 bis 5,
**dadurch gekennzeichnet, daß** die Führungsnuten (18, 20, 30) durch Materialumformung hergestellt sind.

## Claims

1. Connecting element comprising a bolt element with a head (2) and a shank (4) adjoining the latter, the head (2) being formed from a means of engagement (6) for a tool, which is arranged concentrically in relation to a longitudinal bolt axis (X-X), and a first eccentric disc (8), which is arranged eccentrically in relation to the longitudinal bolt axis (X-X), and from at least one second eccentric disc (22), which has a circumferential punching burr and can be pushed onto the shank (4) by way of an eccentrically arranged push-on opening (24), **characterized in that** the shank (4) and the second eccentric disc (22) have such a coding that the second eccentric disc (22) can only be pushed onto the shank (4) in the correct position, such that the circumferential punching burr is oriented away from the head (2).

2. Connecting element according to Claim 1, **characterized in that** the coding comprises at least one guide groove (30), which is located in the shank (4), and a nose (32), which is arranged in the push-on opening (24) of the second eccentric disc (22) and can be guided in the guide groove (30) of the shank (4).

3. Connecting element according to Claim 2, **characterized in that** the guide groove (30), which is located in the shank (4), has a non-symmetrical cross section and the nose (32) is designed non-symmetrically to correspond to the guide groove.

4. Connecting element according to Claim 1, **characterized in that** the shank (4) has at least two guide grooves (18, 20) which have different cross sections and interact with two noses (26, 28) projecting into the interior of the push-on opening (24) of the second eccentric disc (22), it being possible for each nose (26, 28) only to be guided in one of the guide grooves (18, 20) in each case.

5. Connecting element according to one of Claims 1 to 4, **characterized in that** the shank (4) has a threaded section (14) at one end, onto which a nut can be screwed.

6. Connecting element according to one of Claims 1 to 5, **characterized in that** the guide grooves (18, 20, 30) are produced by milling.

7. Connecting element according to one of Claims 1 to 5, **characterized in that** the guide grooves (18, 20, 30) are produced by material deformation.

## Revendications

1. Elément de liaison comprenant un élément de boulon avec une tête (2) et une tige (4) faisant suite à celle-ci, la tête (2) étant formée d'une attaque (6) pour un outil, disposée de manière concentrique à un axe longitudinal du boulon (X-X) et d'un premier disque d'excentrique (8) disposé de manière excentrique par rapport à l'axe longitudinal du boulon et d'au moins un deuxième disque d'excentrique (22) présentant une arête de découpage périphérique, qui peut être enfoncé sur la tige (4) avec un orifice d'enfoncement (24) disposé de manière excentrée, **caractérisé en ce que** la tige (4) et le deuxième disque d'excentrique (22) présentent un codage tel que le deuxième disque d'excentrique (22) puisse être enfoncé sur la tige (4) uniquement en position correcte, de façon que l'arête de découpage périphérique regarde à l'opposé de la tête (2).

2. Elément de liaison selon la revendication 1, **caractérisé en ce que** le codage comprend au moins une rainure de guidage (30) se trouvant dans la tige (4) et un bec (32) disposé dans l'orifice d'enfoncement (24) du deuxième disque d'excentrique (22), qui peut être guidé dans la rainure de guidage (30) de la tige (4).

3. Elément de liaison selon la revendication 2, **caractérisé en ce que** la rainure de guidage (30) se trouvant dans la tige (4) présente . une section dissymétrique et que le bec (32) est de forme dissymétrique de manière correspondant à la rainure de guidage.

4. Elément de liaison selon la revendication 1, **caractérisé en ce que** la tige (4) présente au moins deux rainures de guidage (18, 20) avec des sections différentes entre elles qui coopèrent avec deux becs (26, 28) dépassant à l'intérieur de l'orifice d'enfoncement (24) du deuxième disque d'excentrique (22), chaque bec (26, 28) ne pouvant être guidé que dans l'une des rainures de guidage (18, 20).

5. Elément de liaison selon l'une des revendications 1 à 4, **caractérisé en ce que** la tige (4) présente un tronçon de filetage (14) à une extrémité, sur lequel on peut visser un écrou.

6. Elément de liaison selon l'une des revendications 1 à 5, **caractérisé en ce que** les rainures de guidage (18, 20, 30) sont fabriquées par fraisage.

7. Elément de liaison selon l'une des revendications 1 à 5, **caractérisé en ce que** les rainures de guidage (18, 20, 30) sont fabriquées par formage de matière.
